# FASCICULE DE BREVET EUROPEEN

(11) **EP 0 493 288 B1**
(45) Date de publication et mention de la délivrance du brevet: **19.04.1995**
(21) Numéro de dépôt: 91460057.2
(22) Date de dépôt: 13.12.1991
(51) Int. Cl.: G07C 1/30

(54) **Dispositif mouchard pour système de comptabilisation de stationnement réglementé**
Kontrollvorrichtung in einem Buchhaltungssystem für gesetzlich geregeltes Parken
Monitoring device for controlled parking accounting system

(30) Priorité: 20.12.1990 FR 9016254
(43) Date de publication de la demande: 01.07.1992
(73) Titulaire: HELLO S.A., F-75002 Paris (FR)
(72) Inventeur: Ilie, François, F-75011 Paris (FR); Marechal, Alain, F-75004 Paris (FR)
(74) Mandataire: Dupuis-Latour, Dominique

(56) Documents cités:
- EP-A- 0 034 570
- EP-A- 0 193 635
- EP-A- 0 197 883
- EP-A- 0 402 821
- WO-A-88/09022
- US-A- 4 755 660

## Description

Le domaine de l'invention est celui des dispositifs de comptabilisation du temps et notamment celui des dispositifs de comptabilisation des durées de stationnement réglementé. Plus précisément, la présente invention concerne un dispositif mouchard permettant de mémoriser des données relatives aux derniers stationnements effectués, notamment à titre de preuve en cas de contestation. Un tel dispositif est par exemple décrit dans la publication EP-A-0 402 821.

On entend par dispositif de comptabilisation de temps un appareil constitué par exemple par un boîtier, préférentiellement portable, destiné à être posé derrière le pare-brise d'un véhicule et coopérant avec un ticket électronique prépayé, par exemple une carte à mémoire, pour décrémenter des unités de taxe mémorisées sur la carte, en fonction de la durée du stationnement. Ce type de dispositif permet de s'affranchir de l'utilisation de bornes fixes individuelles (du type parcmètre de trottoir) ou collectives (du type horodateur). L'utilisateur acquitte automatiquement des taxes de stationnement par introduction d'une carte à mémoire prépayée dans son boîtier. Les boîtiers sont généralement vendus, prêtés ou loués par des collectivités locales ou leurs mandataires, qui commercialisent des unités de stationnement, sous forme de cartes d'un type différent pour chaque collectivité locale. La régularité du stationnement peut être vérifiée grâce à un afficheur sur lequel apparaissent les diverses informations nécessaires au personnel de contrôle, par exemple le numéro de zone de stationnement sélectionné par l'utilisateur, un code identifiant notamment le type de carte introduite par l'utilisateur dans le boîtier et représentatif de la ville de stationnement, et le cas échéant une information indicative d'une situation d'infraction, et le nombre d'unités de taxes encore disponibles sur la carte. Les mémoires des cartes peuvent être réinscriptibles ou inscrites irréversiblement.

Un tel dispositif est par exemple décrit dans la demande de brevet française n° 87/06776 au nom de la SOCIETE INTERNATIONALE POUR L'INNOVATION. Le dispositif décrit est un boîtier comportant des moyens de gestion des changements de cartes insérées dans le boîtier. Le boîtier comprend également une horloge interne permettant de donner l'heure courante (heure + minutes), la date courante et de décompter régulièrement des unités de taxe et de tenir compte des périodes de temps de la journée où le stationnement n'est pas payant.

La régularité du stationnement est contrôlée par un agent qui vérifie notamment, grâce aux données affichées sur le boîtier, que le dispositif a bien été mis en marche, que la carte introduite correspond bien à la ville de stationnement, que l'électronique du boîtier n'a pas été altérée ou contrefaite, que toutes les unités de taxes pour le paiement du stationnement n'ont pas déjà été consommées, et que la durée maximale de stationnement autorisé n'a pas été dépassée. Si le contrôleur constate que l'un de ces critères n'est pas rempli, il est en droit de verbaliser le propriétaire du véhicule en infraction.

Cependant, si le dispositif de comptabilisation du stationnement payant, en l'occurrence le boîtier, présente un disfonctionnement qui ne met pas en cause son propriétaire, ou si l'agent qui a verbalisé n'a pas bien apprécié les données affichées par le boîtier, le propriétaire du véhicule n'a jusqu'à présent aucun recours pour prouver qu'il n'était pas en infraction.

La présente invention a notamment pour objectif de pallier cet inconvénient de l'état de la technique.

Plus précisément, le principal objectif de l'invention est de fournir un dispositif permettant à un automobiliste verbalisé de garder trace de son ou ses stationnements récents, de façon à pouvoir prouver qu'il n'était pas en infraction, tout en évitant à un automobiliste ayant réellement été en infraction de tenter de tricher.

Cet objectif, ainsi que d'autres qui apparaîtront par la suite, sont atteints grâce à un dispositif mouchard pour système de comptabilisation de temps, notamment pour la comptabilisation d'une durée de stationnement réglementé, le dispositif comportant des premiers moyens de mémorisation de données de contrôle de fonctionnement où sont écrites à chaque nouvelle utilisation dudit système des données correspondant au moment et à la date du début d'au moins chaque dernier stationnement effectué et des données correspondant au moment et à la date de la fin dudit stationnement effectué, lesdits premiers moyens de mémorisation contenant également une donnée de contrôle de fonctionnement permettant de vérifier si le mécanisme de remise à l'heure dudit système a été actionné depuis la fin dudit stationnement, ledit dispositif comprenant une horloge intégrée autonome lui permettant de générer des informations de date, de décompte du temps et de moment du jour courant, lesdites informations étant susceptibles d'être remises à jour par intervention extérieure.

Dans le cas où chaque système de comptabilisation est constitué d'un boîtier de décompte des durées de stationnement coopérant avec différents types de cartes ou d'éléments à unités de crédit consommables à travers des moyens de lecture-écriture, lesdits premiers moyens de mémorisation de données de contrôle de fonctionnement mémorisent préférentiellement l'information de type de carte utilisée lors dudit stationnement.

Avantageusement, ladite information de type de carte est une information identifiant une aire de validité de ladite carte, notamment une ville.

Préférentiellement, le dispositif comporte également des moyens de mémorisation d'une information de zone de stationnement sélectionnable par l'utilisateur parmi plusieurs zones lors de l'activation dudit système de comptabilisation de temps.

Avantageusement, lesdits premiers moyens de mémorisation de données de contrôle de fonctionnement sont constitués par une case mémoire unique comprenant des données correspondant à l'heure et à la date du début et de la fin dudit dernier stationnement effectué et/ou une donnée permettant de vérifier si le mécanisme de remise à l'heure dudit dispositif a été actionné depuis ledit dernier stationnement et/ou une donnée indiquant la dernière ville dans laquelle ledit dispositif a été utilisé.

Selon un autre mode de réalisation, lesdits premiers moyens de mémorisation de données de contrôle de fonctionnement sont constitués par une table de type FIFO contenant au moins deux cases mémoire permettant la mémorisation de données correspondant à au moins les deux derniers stationnements effectués, chaque case mémoire comprenant des données correspondant à l'heure et à la date du début et de la fin d'au moins le dernier stationnement effectué, et/ou une donnée permettant de vérifier si le mécanisme de remise à l'heure dudit dispositif a été actionné entre le moment de fin de stationnement correspondant et le moment de début du stationnement suivant, et/ou une donnée indiquant la ville dans laquelle ledit dispositif a été utilisé.

Avantageusement, lesdits premiers moyens de mémorisation sont constitués par une mémoire permanente du type PROM, EPROM ou EEPROM.

Préférentiellement, lesdites informations d'aire de stationnement et/ou de zone de stationnement sont stockées dans des seconds moyens de mémorisation temporaire de type RAM.

Selon un mode de réalisation avantageux, lesdits seconds moyens de mémorisation sont réinitialisés par une remise à jour extérieure de l'heure et/ou de la date et/ou par une interruption de l'alimentation dudit dispositif.

Préférentiellement, le dispositif selon l'invention comprend des moyens de fourniture desdites données de contrôle de fonctionnement à un dispositif testeur externe.

D'autres caractéristiques et avantages de la présente invention apparaîtront à la lecture de la description suivante d'un mode de réalisation préférentiel de l'invention, donné à titre illustratif et non limitatif, et des dessins annexés, dans lesquels:
- la figure 1 est un schéma de principe d'un mode de réalisation préférentiel du dispositif selon la présente invention;
- la figure 2 est un organigramme illustrant le principe de mémorisation de données permettant un contrôle ultérieur du fonctionnement du dispositif selon l'invention;
- la figure 3 est un organigramme représentant le fonctionnement de l'invalidation du dispositif selon l'invention.
- la figure 4 représente l'organisation des moyens de mémorisation des données de contrôle de fonctionnement selon un mode de réalisation avantageux de la présente invention;
- la figure 5 est un organigramme illustrant le fonctionnement de l'invention après avoir rétabli son alimentation.

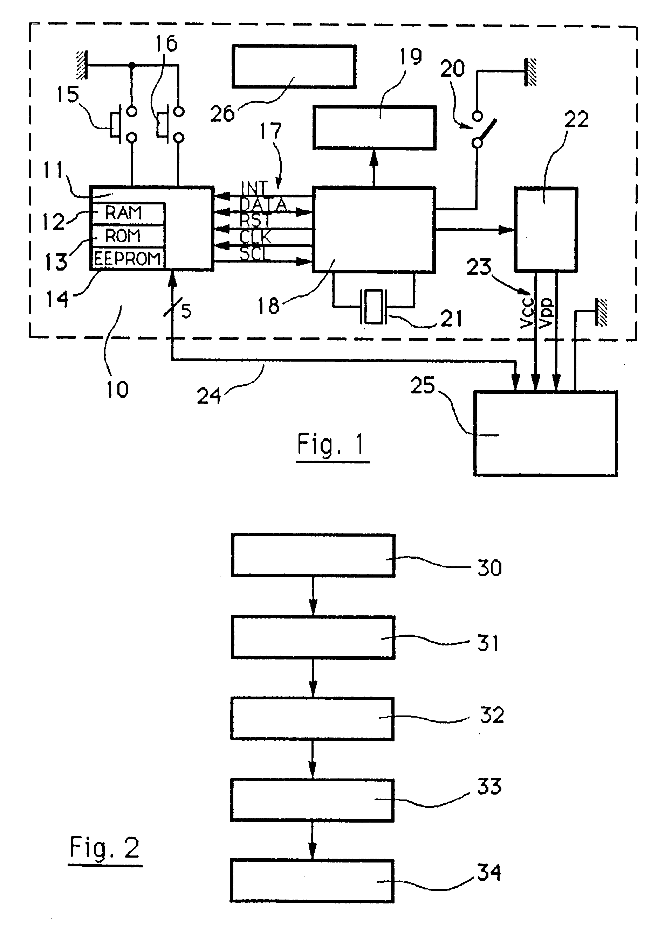

La figure 1 est un schéma de principe d'un mode de réalisation préférentiel du dispositif selon la présente invention.

Le dispositif mouchard selon la présente invention utilise une électronique 10 préférentiellement embarquée dans un boîtier portable coopérant avec un élément 25 à unités de crédit consommables. L'électronique 10 comprend un microcontrôleur 11 intégrant une mémoire non permanente 12, une mémoire permanente 13 et une mémoire permanente électriquement effaçable 14. Le microcontrôleur 11 est par exemple un circuit de la famille MOTOROLA (marque déposée) 6805. La RAM 12 sert à mémoriser des paramètres de calcul pendant le fonctionnement du dispositif, la ROM 13 à mémoriser des données confidentielles du type algorithme de calcul et l'EEPROM 14 à mémoriser notamment des données permettant d'effectuer un éventuel contrôle du bon fonctionnement du dispositif, comme il sera expliqué par la suite. L'EEPROM 14 peut également mémoriser des donnnées servant à modifier la fréquence d'oscillation d'un quartz 21, à définir des valeurs de consigne pour la génération de tensions spécifiques (alimentation de l'élément 25) ou concernant une clé secrète. L'EEPROM 14 a, selon un mode de réalisation spécifique, une taille de 256 octets. Le microcontrôleur 11 dialogue avec un circuit intégré spécifique à une application (ASIC) à travers cinq lignes 17. L'ASIC 18 est par exemple du type FULL CUSTOM. La ligne INT envoie au microcontrôleur 11 une information d'interruption correspondant à l'introduction ou au retrait de l'élément 25 dans le dispositif 10 (réveil du microcontrôleur). De plus, une interruption est générée toutes les minutes, l'unité de temps étant la minute, et lorsque l'élément 25 actionne l'interrupteur de fin de course 20 de l'élément 25 dans le boîtier. Les deux lignes DATA et SCL véhiculent les informations échangées entre les deux circuits. La ligne RST est une ligne de remise à l'état initial du microcontrôleur 11 et la ligne CLK véhicule le signal d'horloge pour le microcontrôleur 11. De plus, l'ASIC est équipée d'une horloge-temps réel pilotée par le quartz 21 raccordé à l'ASIC 18. Le quartz 21 oscille avantageusement à 32 kHz. L'ASIC 18 effectue également une gestion de moyens d'affichage 19, par exemple constitués par un écran à cristaux liquides. L'écran 19 permet notamment l'affichage de l'heure courante (heure et minutes), de l'heure limite de stationnement autorisée, du nombre d'unités de crédit de paiement disponibles sur l'élément 25 et de la zone de stationnement. La zone de stationnement peut être modifiée par l'utilisateur par actionnement des touches 15 et 16 figurant préférentiellement sur le dessus du boîtier renfermant l'électronique 10. Le choix d'une zone de stationnement plutôt qu'une autre permet de modifier le nombre d'unités consommables débitées de l'élément 25 et donc d'adapter le système de paiement à différentes zones ayant des prix de stationnement horaire différents. Selon un mode de réalisation, l'utilisateur a le choix entre différentes zones affichées sous la forme de chiffres hexadécimaux.

L'ASIC 18 fournit une alimentation à un module 22 élévateur de tension fournissant une tension Vcc et une tension Vpp à l'élément 25, nécessaires à son fonctionnement. L'alimentation du système complet est assurée par des moyens d'alimentation 26, avantageusement constitués par un jeu de piles pour permettre la portabilité du boîtier. Les tensions 23 sont fournies à l'élément 25 par rapport à une masse commune. Cinq lignes de communication 24 relient le microcontrôleur 11 à l'élément 25. L'élément 25 a avantageusement la forme d'une carte de crédit et comporte un port d'entrée-sortie et une mémoire du type PROM mémorisant un nombre d'unités de taxe, consommables préférentiellement de façon irréversible.

Les touches 15 et 16 permettent à l'utilisateur de régler l'heure et la date courantes en appuyant simultanément sur les deux touches 15 et 16 lorsqu'il introduit une carte 25 dans le boîtier, pour commander une remise à jour de l'heure et de la date. L'écran 19 affiche alors successivement, par intervalles de 4 secondes, l'année, puis le mois, puis le jour de la semaine et le quantième, puis l'heure et enfin les minutes. Il suffit d'appuyer sur une des deux touches 15 et 16 pour incrémenter ou décrémenter la donnée affichée. Le dispositif peut avantageusement tenir compte du passage aux heures d'été et d'hiver.

La figure 2 est un organigramme illustrant le principe de mémorisation de données permettant un contrôle ultérieur du fonctionnement du dispositif selon l'invention.

La procédure habituelle suivie par l'utilisateur d'un boîtier selon l'invention consiste à introduire une carte de paiement dans le boîtier avant qu'il ne quitte son véhicule. L'afficheur 19 (fig.1) affiche alors respectivement l'heure courante, le crédit d'unités disponibles mémorisé sur la carte 25, puis alternativement et plusieurs fois de suite un numéro de zone, le jour et l'heure limite de stationnement. La sélection de la zone de stationnement dans laquelle se trouve le véhicule s'effectue, comme déjà précisé, à l'aide des touches 15 et 16. L'étape 30 correspond à cette succession d'affichages sur l'écran 19. Au bout de quelques dizaines de secondes, la première unité de taxe est déduite de la mémoire de la carte et l'heure exacte (à la minute près) et la date sont mémorisées dans l'EEPROM 14 du microcontrôleur 11. Cette mémorisation correspond à l'étape 31 et dure quelques ms. L'étape 32 est celle du stationnement proprement dit, et consiste à afficher cycliquement l'heure courante, le numéro de zone, l'heure de début de stationnement et un code représentatif de l'aire de validité du stationnement. Ce code est par exemple le résultat du calcul secret tel que décrit dans la demande de brevet conjointe au nom du même déposant intitulée "Système et dispositif de comptabilisation du temps comportant des moyens de génération de codes à des moments calculés par un algorithme secret". Ce calcul met notamment en oeuvre un code d'aire de validité de la carte introduite dans le boîtier, qui peut par exemple correspondre à un code de ville lorsque les cartes sont commercialisées par une municipalité. Chaque ville possède en effet ses propres cartes qu'elle vend aux utilisateurs, chacune des cartes comportant le même numéro, les numéros de ville étant différents d'une ville à l'autre. Cela permet notamment d'éviter que des cartes achetées dans une ville ne soient utilisées dans une autre. Le code de ville correspond donc à un certain type de cartes. Les unités de taxe sont décrémentées de la carte en fonction du temps passé et de la zone sélectionnée. L'étape 33 correspond au retour du propriétaire du véhicule qui retire la carte 25 du boîtier pour arrêter le décompte d'unités. Suite à ce retrait de carte, l'étape 34 consiste à mémoriser l'heure de fin de stationnement et du jour courant dans l'EEPROM 14. Il est également possible de mémoriser à cet instant là le numéro de la ville dans l'EEPROM 14 par lecture de la RAM 12. Le mouchard de l'invention est alors valide c'est à dire que l'EEPROM mémorise à la fois au moins les heures et la (les) date(s) de début et de fin de stationnement avec le code de l'aire de stationnement.

Dans le cas où, pour une raison quelconque, l'automobiliste aurait été verbalisé par un agent, et s'il considère que cette verbalisation est injustifiée, il a la possibilité d'amener son boîtier auprès d'un centre de contrôle, par exemple un poste de police, où se trouve un dispositif testeur. Le testeur peut entrer en communication, à travers des moyens de lecture-écriture spécifiques ou alors plus simplement à travers les moyens de lecture-écriture du boîtier servant également pour la carte, avec l'EEPROM 14 pour vérifier si l'automobiliste était ou non en règle au moment où il a été verbalisé. Cette vérification est simple à effectuer puisque les données mémorisées concernent des données temporelles du début et de la fin de stationnement. Le testeur peut par exemple être constitué d'un coffret raccordé à un élément ayant la même forme qu'une carte et pouvant se glisser dans le boîtier renfermant le mouchard de l'invention pour dialoguer avec lui.

Si l'automobiliste considère en revanche que la verbalisation est justifiée, il peut continuer à utiliser son système de comptabilisation de temps de stationnement, les anciennes données de contrôle de fonctionnement mémorisées dans l'EEPROM 14 étant remplacées par celles résultant d'un nouveau stationnement.

Ce principe de mouchard permet donc d'éviter des pénalisations injustifiées. Il est à signaler qu'il est également applicable dans le cas où il n'est pas possible à l'utilisateur de régler lui-même l'heure et la date courantes de son boîtier.

Cependant, il est possible à un utilisateur ayant été réellement en infraction, de tenter de tricher en forçant dans le mouchard tel que précédemment décrit une mémorisation de la date et de l'intervalle d'heures dans lequel il a été verbalisé pour tenter de faire croire que son boîtier débitait des unités de stationnement à ce moment. Il lui suffit en effet pour cela de modifier l'heure, et éventuellement la date du boîtier de façon à le positionner approximativement à cette période de verbalisation. En introduisant une carte dans le dispositif pour lui faire débiter des unités, par exemple à son domicile, il pourrait alors provoquer une mémorisation dans le mouchard d'une heure et d'une date de début de stationnement antérieures à sa verbalisation et une mémorisation d'une heure et d'une date de fin de stationnement postérieures à cette verbalisation. L'heure et la date de verbalisation étant alors situées entre ces deux moments mémorisés, il pourrait alors prétendre n'avoir pas été en infraction et le dispositif testeur ne pourrait pas détecter qu'il y a eu fraude.

Pour empêcher qu'une telle manoeuvre ne soit possible, le mouchard selon l'invention propose d'inscrire dans l'EEPROM du microcontrôleur une donnée indiquant si le mécanisme de remise à l'heure a été actionné depuis le dernier stationnement réglementé effectué. Cette donnée peut par exemple être constituée d'un octet (00H si une remise à l'heure a été effectuée et FFH si aucune remise à l'heure n'a été effectuée depuis le dernier stationnement). L'EEPROM 14 contient ainsi notamment les données suivantes:
- 1 octet indiquant si le mécanisme de remise à l'heure a été actionné;
- 3 octets déterminant la date (année, mois et jour) et le moment (heure pile et minutes) de début du dernier stationnement;
- 3 octets déterminant la date (année, mois et jour) et le moment (heure pile et minutes) de fin du dernier stationnement.

Ces 7 octets sont lisibles par le testeur qui envoie un message d'identification au microcontrôleur 11 pour être autorisé à lire ce contenu de l'EEPROM 14.

L'EEPROM 14 peut également comporter un espace mémoire supplémentaire pour mémoriser, par exemple sur 2 octets, le code de la ville dans laquelle le dernier stationnement a été effectué, et sur un octet la zone dans laquelle le dernier stationnement a été effectué.

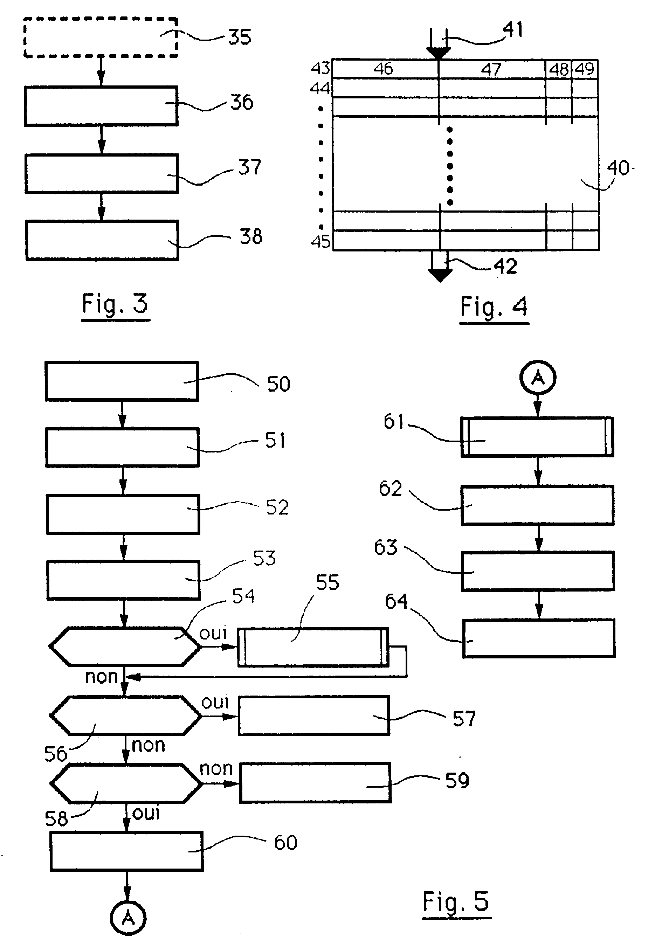

La figure 3 est un organigramme représentant le fonctionnement d'une telle invalidation.

L'invalidation peut notamment résulter d'un retrait des piles assurant l'alimentation 26 du système. En effet, il est nécessaire de prévoir une invalidation dans ce cas, car le mouchard ne peut plus inscrire de donnée dans l'EEPROM 14 si son alimentation est supprimée. Une telle interruption de l'alimentation ne détruit cependant pas les données mémorisées dans l'EEPROM 14. Après que les piles ont été remises en place (étape 35), le mouchard selon l'invention oblige l'utilisateur à effectuer une remise à l'heure 36 du boîtier. Cette remise à l'heure provoque une invalidation du mouchard (étape 37), par remplacement du FFH par 00H de la donnée permettant de détecter une remise à l'heure. Le mouchard est alors en état de veille (étape 38). L'octet permettant de savoir si une remise à l'heure a été effectuée est effacé à la fin du stationnement qui suivra.

Selon un mode de réalisation avantageux de l'invention, l'EEPROM 14 mémorise des données de contrôle de fonctionnement pour une pluralité de stationnements utilisant le système de l'invention. Les moyens de mémorisations fonctionnent alors de la même manière qu'une pile de type FIFO. Dans le cas de la présente application du mouchard, une mémoire comprenant des données des huit derniers stationnements effectués semble suffisante pour permettre un plus grand confort d'utilisation du système. En effet, lorsqu'un automobiliste est verbalisé et qu'il considère que cette verbalisation est injustifiée, il ne peut réutiliser son boîtier avant de l'avoir fait expertiser par le testeur, faute de quoi les données concernant son stationnement précédent seraient effacées et il ne pourrait plus prouver qu'il n'était pas en infraction.

La figure 4 représente l'organisation des moyens de mémorisation des données de contrôle de fonctionnement selon un tel mode de réalisation avantageux de l'invention.

Les moyens de mémorisation peuvent être constitués par une table 40, par exemple de type FIFO. Les données de contrôle de fonctionnement sont entrées dans la table par un bus 41 et mémorisées dans des zones mémoire 43 à 45. Ces zones mémoire sont par exemple au nombre de huit, pour permettre la mémorisation des huit derniers stationnements. Chaque séquence de données mémorisées est constituée par la date et l'heure 46 sur trois octets du début d'un stationnement, par la date et l'heure 47 sur trois octets de la fin de ce stationnement, par un octet 48 indiquant si une remise à l'heure a été effectuée après la fin de ce stationnement et éventuellement par deux octets 49 comprenant le code de la ville où ce stationnement a été effectué. Lorsqu'une nouvelle séquence de données doit être mémorisée, celles déjà mémorisées subissent un décalage vers le bas de la table 40. Lorsque la table 40 est pleine, la mémorisation d'une nouvelle séquence de données provoque la perte de la séquence la plus ancienne qui sort de la table par 42.

Une telle organisation mémoire permet à un automobiliste considérant qu'il a été injustement verbalisé de pouvoir continuer à utiliser son boîtier pour un certain nombre de stationnements, en conservant la possibilité de prouver qu'il était en règle.

Selon une autre caractéristique de l'invention, des données relatives à la ville et à la zone de tarification dans lesquelles a été effectué le dernier stationnement sont inscrites à la fin du stationnement dans la mémoire temporaire RAM 12 (fig.1). Cette caractéristique apparaît dans l'organigramme de la figure 5 illustrant également le fonctionnement du mouchard de l'invention après avoir rétabli l'alimentation du dispositif.

L'étape 50 correspond à l'introduction de piles dans le boîtier renfermant le mouchard de l'invention. Cette introduction provoque (étape 51) une remise à zéro du contenu de la RAM 12. L'étape 52 est une étape d'attente d'une introduction de carte pendant laquelle le dispositif est en veille. Lorsqu'une carte est introduite (étape 53), le dispositif regarde si les deux touches 15 et 16 ont été simultanément enfoncées. Si oui, une procédure permettant une remise à l'heure, telle que précédemment décrite, est lancée (étape 55). Lorsque la remise à l'heure est terminée ou si les deux touches 15 et 16 n'ont pas été enfoncées, le dispositif regarde si l'élément, en l'occurence une carte, introduit est le testeur (étape 56); le testeur dialogue avec le boîtier pour s'identifier. Si la réponse est oui, l'étape 57 correspond à la lecture des données de contrôle de fonctionnement mémorisées dans l'EEPROM 14 et se termine par le retrait du testeur ou de l'élément assurant l'interface entre le testeur et le boîtier. Si l'élément introduit dans le boîtier n'est pas le testeur, la validité de la carte est testée (étape 58) et entraîne une demande de retrait (étape 59) apparaîssant sur les moyens d'affichage 19 si le boîtier ne reconnait pas la carte. Si la carte est reconnue, son contenu est recopié dans la RAM 12 (étape 60) pour alimenter celle-ci le moins possible. Le contenu de la carte comprend notamment le code de la ville qui l'a émise, les zones accompagnées de leur description horaire et tarifaire dans lesquelles elle est utilisable, divers codes et données, et le nombre d'unités de taxe. L'étape 61 consiste à établir un dialogue avec l'utilisateur pour qu'il définisse notamment la zone dans laquelle il stationne et à mémoriser les sélections effectuées. Il est également procédé à une mémorisation de l'affichage effectué, du type de carte utilisé, de diverses variables temporaires, et de l'heure de début de stationnement permettant de calculer l'heure de fin de stationnement autorisé. L'étape 62 marque le début du stationnement et consiste à mémoriser en RAM 12 le numéro de zone sélectionné. L'étape 63 correspond au stationnement effectif du véhicule pendant laquelle l'ASIC 18 réveille le microcontrôleur 11 toutes les minutes pour qu'il gère les unités de taxe mémorisées dans la RAM 12 et dans l'élément 25 et gère simultanément l'affichage 19. L'étape 64 correspond à la fin du stationnement où le propriétaire du véhicule retire la carte du boîtier. Le numéro de ville est alors mémorisé dans l'EEPROM 14.

Le numéro de ville et de zone restent mémorisés dans la RAM 12 jusqu'à ce qu'un nouveau numéro de ville et de zone viennent les remplacer ou jusqu'à ce qu'une coupure d'alimentation survienne.

La mémorisation du numéro de ville dans l'EEPROM 14 permet de contrôler par la suite à l'aide du testeur si la carte utilisée pour acquitter le paiement du stationnement était une carte émise par la ville où la verbalisation a été effectuée, et non pas une carte émise par une autre ville.

Il est à noter qu'il est également possible de mémoriser les zones de stationnement dans une table de l'EEPROM 14, afin de disposer d'une quantité plus importante d'informations concernant les stationnements effectués.

## Revendications

1. Dispositif mouchard pour système de comptabilisation de temps, notamment pour la comptabilisation d'une durée de stationnement réglementé, comprenant une horloge intégrée autonome lui permettant de générer des informations de date, de décompte du temps et de moment du jour courant, lesdites informations étant susceptibles d'être remises à jour par intervention extérieure, caractérisé en ce qu'il comporte des premiers moyens (14) de mémorisation de données de contrôle de fonctionnement où sont écrites à chaque nouvelle utilisation dudit système des données correspondant au moment et à la date du début d'au moins chaque dernier stationnement effectué et des données correspondant au moment et à la date de la fin dudit stationnement effectué, lesdits premiers moyens (14) de mémorisation contenant également une donnée de contrôle de fonctionnement permettant de vérifier si le mécanisme de remise à l'heure dudit système a été actionné depuis la fin dudit stationnement.

2. Dispositif selon la revendication 1 dans lequel chaque système de comptabilisation est constitué d'un boîtier de décompte des durées de stationnement coopérant avec différents types de cartes ou d'éléments (25) à unités de crédit consommables à travers des moyens de lecture-écriture, caractérisé en ce que lesdits premiers moyens (14) de mémorisation de données de contrôle de fonctionnement mémorisent l'information de type de carte utilisée lors dudit stationnement.

3. Dispositif selon la revendication 2 caractérisé en ce que ladite information de type de carte (25) est une information identifiant une aire de validité de ladite carte (25), notamment une ville.

4. Dispositif selon l'une des revendications 2 ou 3 caractérisé en ce qu'il comporte également des moyens de mémorisation d'une information de zone de stationnement sélectionnable par l'utilisateur parmi plusieurs zones lors de l'activation dudit système de comptabilisation de temps.

5. Dispositif selon l'une quelconque des revendications 1 à 4 caractérisé en ce que lesdits premiers moyens (14) de mémorisation de données de contrôle de fonctionnement sont constitués par une case mémoire unique comprenant des données correspondant à l'heure et à la date du début et de la fin dudit dernier stationnement effectué et/ou une donnée permettant de vérifier si le mécanisme de remise à l'heure dudit dispositif a été actionné depuis ledit dernier stationnement et/ou une donnée indiquant la dernière ville dans laquelle ledit dispositif a été utilisé.

6. Dispositif selon l'une quelconque des revendications 1 à 4 caractérisé en ce que lesdits premiers moyens (14) de mémorisation de données de contrôle de fonctionnement sont constitués par une table (40) de type FIFO contenant au moins deux cases mémoire (43,44,...,45) permettant la mémorisation de données correspondant à au moins les deux derniers stationnements effectués, chaque case mémoire (43,44,...,45) comprenant des données correspondant à l'heure et à la date du début (46) et de la fin (47) d'au moins le dernier stationnement effectué, et/ou une donnée (48) permettant de vérifier si le mécanisme de remise à l'heure dudit dispositif a été actionné entre le moment de fin de stationnement correspondant et le moment de début du stationnement suivant, et/ou une donnée (49) indiquant la ville dans laquelle ledit dispositif a été utilisé.

7. Dispositif selon l'une quelconque des revendications 1 à 6 caractérisé en ce que lesdits premiers moyens (14) de mémorisation sont constitués par une mémoire permanente du type PROM, EPROM ou EEPROM.

8. Dispositif selon l'une quelconque des revendications 2 à 7 caractérisé en ce que lesdites informations d'aire de stationnement et/ou de zone de stationnement sont stockées dans des seconds moyens (12) de mémorisation temporaire de type RAM.

9. Dispositif selon la revendication 8 caractérisé en ce que lesdits seconds moyens (12) de mémorisation sont réinitialisés par une remise à jour extérieure de l'heure et/ou de la date et/ou par une interruption de l'alimentation (26) dudit dispositif.

10. Dispositif selon l'une quelconque des revendications précédentes caractérisé en ce qu'il comprend des moyens de fourniture desdites données de contrôle de fonctionnement à un dispositif testeur externe.

## Patentansprüche

1. Kontrollvorrichtung für ein Zeitbuchungssystem, insbesondere für die Buchung einer reglementierten Parkdauer, das eine integrierte autonome Uhr aufweist, die es ihr erlaubt, Informationen bezüglich des Datums, des Zeitablaufes und des Augenblickes des laufenden Tages zu erzeugen, wobei die Informationen durch äußere Einwirkung aktualisiert werden können,
dadurch gekennzeichnet, daß
sie erste Einrichtungen (14) zur Speicherung von Funktionssteuerdaten aufweist, in die bei jeder neuen Benutzung des Systems Daten, die dem Augenblick und dem Datum des Beginns von zumindest jedem letzten ausgeführten Parken entsprechen, und Daten eingeschrieben werden, die dem Augenblick und dem Datum des Endes des ausgeführten Parkens entsprechen, wobei die ersten Einrichtungen (14) zum Speichern gleichfalls Funktionssteuerdaten enthalten, die es erlauben zu verifizieren, ob der Mechanismus zum Zurücksetzen des Systems seit dem Ende des Parkens betätigt worden ist.

2. Vorrichtung gemäß Anspruch 1, in der jedes Buchungssystem aus einem Gehäuse zum Herunterzählen der Parkdauer besteht, das mit verschiedenen Typen von Karten oder Elementen (25) mit verbrauchbaren Krediteinheiten über Lese-Schreibe-Einrichtungen zusammenwirkt, dadurch gekennzeichnet, daß die ersten Einrichtungen (14) zum Speichern der Funktionssteuerdaten die Information des Types der beim Parken benutzten Karte speichern.

3. Vorrichtung gemäß Anspruch 2, dadurch gekennzeichnet, daß die Information des Types der Karte (25) eine Information ist, die einen Gültigkeitsbereich der Karte (25), insbesondere in der Stadt, identifiziert.

4. Vorrichtung gemäß einem der Ansprüche 2 oder 3, dadurch gekennzeichnet, daß sie gleichfalls Einrichtungen zum Speichern einer Information der Parkzone aufweist, die durch den Benutzer unter mehreren Zonen bei der Aktivierung des Zeitbuchungssystems auswählbar ist.

5. Vorrichtung gemäß einem der Ansprüche 1 bis 4, dadurch gekennzeichnet, daß die ersten Einrichtungen (14) zum Speichern der Funktionssteuerdaten aus einem einzigen Speicherfach gebildet sind, das Daten aufweist, die der Stunde und dem Datum des Beginns und des Endes des letzten ausgeführten Parkens entsprechen und/oder Daten, die es erlauben zu verifizieren, ob der Mechanismus zum Zurücksetzen der Vorrichtung seit dem letzten Parken betätigt worden ist, und/oder Daten, die die letzte Stadt anzeigen, in der die Vorrichtung verwendet worden ist.

6. Vorrichtung gemäß einem der Ansprüche 1 bis 4, dadurch gekennzeichnet, daß die ersten Einrichtungen (14) zum Speichern der Funktionssteuerdaten durch eine Tabelle (40) vom Typ FIFO gebildet sind, die zumindest zwei Speicherbereiche (43, 44..., 45) aufweist, die die Speicherung der Daten erlauben, die zumindest den beiden letzten ausgeführten Malen des Parkens entsprechen, wobei jeder Speicherbereich (43, 44,...,45) Daten aufweist, die der Stunde und dem Datum des Beginns (46) und des Endes (47) zumindest des letzten ausgeführten Parkens entsprechen, und/oder Daten (48), die es erlauben zu verifizieren, ob der Mechanismus zum Zurücksetzen der Vorrichtung zwischen dem Augenblick des Endes des entsprechenden Parkens und dem Augenblick des Beginns des darauffolgenden Parkens betätigt worden ist, und/oder Daten (49), die die Stadt anzeigen, in der die Vorrichtung benutzt worden ist.

7. Vorrichtung gemäß einem der Ansprüche 1 bis 6, dadurch gekennzeichnet, daß die ersten Einrichtungen (14) zum Speichern durch einen Permanentspeicher vom Typ PROM, EPROM oder EEPROM gebildet sind.

8. Vorrichtung gemäß einem der Ansprüche 2 bis 7, dadurch gekennzeichnet, daß die Informationen des Parkbereiches und/oder der Parkzone in zweiten Einrichtungen (12) des Typs RAM zum temporären Speichern gespeichert sind

9. Vorrichtung gemäß Anspruch 8, dadurch gekennzeichnet, daß die zweiten Einrichtungen (12) zum Speichern durch ein äußeres Aktualisieren der Stunde und/oder des Datums und/oder durch eine Unterbrechung der Energiezufuhr (26) der Vorrichtung wieder initialisiert werden.

10. Vorrichtung gemäß einem der vorhergehenden Ansprüche, dadurch gekennzeichnet, daß sie Einrichtungen zum Liefern der Funktionssteuerdaten zu einer externen Testvorrichtung aufweist.

## Claims

1. A snooper device for a time-accounting system, in particular for the accounting of a period of regulated parking, comprising a self-operated integrated clock enabling it to generate information elements upon the date, the time down-counting and the time of the current day, said information elements being capable of being updated by external action, characterized in that it comprises first means (14) for storing operation checking data in which there are written, at each fresh use of said system, data corresponding to the time and to the date of start of at least each last instance of parking, and data corresponding to the time and to the date of the end of said instance of parking, said first storage means (14) also containing operation checking data for verifying whether the time resetting mechanism of said system has been activated since the end of said instance of parking.

2. A device according to claim 1, wherein each accounting system is comprised of a box for the down-counting of the parking times, cooperating with different types of cards or elements (25) containing consumable credit units through reading-writing means, characterized in that said first means (14) for storing operation checking data store the information element upon the type of card used during said instance of parking.

3. A device according to claim 2, characterized in that said information element upon the type of card (25) is an information element identifying an area of validity of said card (25), in particular a city.

4. A device according to anyone of claims 2 or 3, characterized by also including means for storing an information element upon the parking zone that can be selected by the user among several zones during the activation of said time-accounting system.

5. A device according to any one of claims 1 to 4, characterized in that said first means (14) for storing operation checking data are comprised of a single memory compartment comprising data that correspond to the hour and date of the last instance of parking and/or data that can be used to check whether the time resetting mechanism of said device has been activated since said last instance of parking and/or data indicating the last city in which said device has been used.

6. A device according to any one of claims 1 to 4, characterized in that said first means (14) for storing operation checking data are comprised of a FIFO-type table (40) containing at least two memory compartments (43, 44, ...,45) enabling the storing of data corresponding to at least the last two instances of parking, each memory compartment (43, 44, ...,45) comprising data corresponding to the time and date of start (46) and end (47) of at least the last instance of parking and/or data (48) making it possible to verify whether the time resetting mechanism of said device has been activated between the corresponding time of the end of parking and the time of the start of the next parking and/or data (49) indicating the city in which said device has been used.

7. A device according to any one of claims 1 to 6, characterized in that said first storage means (14) are comprised of a permanent memory of the PROM, EPROM or EEPROM type.

8. A device according to any one of claims 2 to 7, characterized in that said information elements upon the parking area and/or parking zone are stored in RAM-type second temporary storage means (12).

9. A device according to claim 8, characterized in that said second storage means (12) are reset by an external updating of the hour and/or the data and/or by an interruption of the supply (26) to said device.

10. A device according to any one of the preceding claims, characterized by including means to provide an external testing device with said operation checking data.
